# EUROPEAN PATENT SPECIFICATION

(11) **EP 2 178 973 B1**
(45) Date of publication and mention of the grant of the patent: **23.01.2013**
(21) Application number: 08786643.0
(22) Date of filing: 30.07.2008
(51) Int. Cl.: C08L 33/24

(54) **SWELLABLE COMPOSITIONS**
QUELLBARE ZUSAMMENSETZUNGEN
COMPOSITIONS GONFLABLES

(30) Priority: 13.08.2007 GB 0715716
(43) Date of publication of application: 28.04.2010
(73) Proprietor: BASF SE, 67056 Ludwigshafen (DE)
(72) Inventor: LOEHNER, Beatrix, Bradford West Yorkshire BD9 4EA (GB); BUTTERS, Martin, Bradford West Yorkshire BD10 8NJ (GB); NORMINGTON, David, Leeds West Yorkshire LS28 8PA (GB); FLEETWOOD, Cameron, Todmorden Lancashire OL14 5BY (GB)
(74) Representative: Peatfield, Jeremy William
(86) International application number: PCT/EP2008/060015
(87) International publication number: WO 2009/021849

(56) References cited:
- WO-A-2006/108784
- JP-A- 2004 331 851
- US-A- 5 952 420

## Description

The present invention relates to water-swellable compositions, polymer dispersions and polymer microparticles for their preparation.

Water-swellable seals comprising an elastomer component and particulate water-absorbent material being a combination of a polysaccharide and a water-superabsorbent polymer selected from polymers based on methacrylate, acrylate, polymethacrylic acid, polyacrylic acid and salts thereof, polyacrylamide and so forth are known from e.g. US 6,358,580. The water-superabsorbent polymers have an average particle size in the range of from 5 to 800 microns. In one of the suitable superabsorbents only 2.3% by weight of the particles have a particle size of below 50 microns.

Water-sealing sealants used for waterstop materials in the various civil engineering and construction works comprising a water-swelling part and a non-water-swelling part are described e.g. in EP 588,286 A1: as non-water-swelling part vinyl chloride resins, ethylene-vinyl acetate copolymers, polyethylene, polypropylene, EPDM and silicone resins can be chosen, and as water-swelling materials urethane resins, carboxymethyl cellulose, polyvinyl alcohol, sodium polyacrylate and others. In the case of vinyl chloride resin, it seems to be preferable to also apply a plasticizer, like a phthalate such as dioctyl phthalate, ditridecylphthalate, or a trimellitate, pyromellitate or an adipate or the like. In the examples only water-swelling urethane resins from unknown sources and particle sizes are disclosed.

US 4,532,298 discloses water-swellable rubber compositions comprising a chloroprene rubber, a highly water-absorptive resin, a rubbery polymer and a metal oxide-based vulcanizing agent. Preferably the high-swelling resin is applied in a powdery form by pulverization to have such a particle size distribution as to pass a screen of 20 mesh opening, which corresponds to 840 microns. It is mentioned that a coarser powder may exhibit unevenness in the expansion when swollen with water or may loose smoothness of the surface.

WO 97/34945 discloses spray dried granules which have a size of at least 90% by weight above 20 microns and which are formed of primary particles, wherein the primary particles have a size at least 90% by weight below 10 microns and are formed of polymer of water soluble ethylenically unsaturated monomer or monomer blend and 5 to 2000 ppm polyethylenically unsaturated cross linking agent, the granules have been formed by spray drying a reverse phase emulsion of the primary polymer particles in the non-aqueous liquid. In particular, primary particles are disclosed, which exhibit a primary particle-size 90% by weight in the range of from 0.5 to 3 microns, which are obtained by reverse phase emulsion polymerization of a mixture comprising 80% by weight dimethylaminoethylacrylate quaternized with methylchloride and 20% by weight acrylamide in the presence of methylene-bis-acrylamide. The granules are used in flocculating or viscosifying compositions, e.g. in the field of sewage sludge treatment, or in the paper-making process. Water-swellable properties are not disclosed, nor their use to manufacture water-swellable compositions.

US 4,585,812 A discloses a composition characterized by a non-aqueous liquid such as oil or xylene containing a dispersion of anhydrous water-swellable polymer particles where 1 part by weight is below 3 microns and 1 to 7 parts by weight (see col. 6, I. 25 to 34) are coarse particles of 10 to 300 microns. Example 1 relates to a non-crosslinked copolymer, in which the particle size before polymerization, i.e. before deoxygenation and addition of initiator, is in the range of 1 to 2 microns. The particle size of the resulting polymerized fine particles is not disclosed. In example 2 another non-crosslinked copolymer is prepared, in which the particle size is below 3 microns, however, it remains unclear, whether the particle size is below 2 microns. The fine particles are not mixed with a water-insoluble thermoplastic polymer. Moreover, the particles are not used for the manufacture of seals.

EP 0 179 937 A1 discloses a water-swelling elastomer three-component composition consisting essentially of a homogenous mixture of an elastomer, a water-absorbent resin and a water-soluble resin, wherein the water-soluble resin is selected from the group of polyethylene oxide, a polyvinylpyrrolidone, a hydroxyl ethylcellulose, a hydroxyl propylcellulose and a mixture thereof. A disadvantage of this patent application is that in addition to the elastomer two further resins are needed to achieve the desired effects. Another disadvantage is the loss of water-soluble resin when the elastomer is swollen in contact with water, because the dissolved discrete molecules permeate out of the elastomer into the water phase. In a subsequent rehydration step the elastomer results in poorer swelling properties. The water-absorbing resin should have a particle diameter below 400 microns, preferably below 100 microns. However, the lower limit of the particle diameter is not disclosed. Only in example 1 a crosslinked product of polysodium acrylate, Aquakeep®4S is mentioned, which exhibits a particle diameter of 70 microns. Other water-absorbent resins are mentioned, too, e.g. in example 3 (Sanwet IM-300) and in example 9 (Sumikagel S-50), however, no particle diameters are given. Furthermore, EP 0 179 937 mentions on page 5, line 16, that the advantage of finer particle size is that a more homogenous composition is obtained, and a swollen product obtained therefrom becomes homogenous.

WO2006108784 describes water swellable compositions, dispersions and polymer microparticles and their preparation. A water swellable composition is disclosed which can be obtained by combining a non-water swelling thermoplastic or elastomeric polymer and a water swelling material comprising hydrophilic polymer microparticles in which the hydrophilic polymer microparticles have a particle volume mean diameter of not more than 2 microns.

EP 0 318 615 A1 describes a water swellable composition for the prevention of water leakage in construction works. The composition comprises an elastomer, such as a polychloroprene rubber, and a highly absorptive polymeric cross-linked resin. The reference seeks to overcome the problems of reduced absorptivity of fluid containing calcium ions. This is said to be overcome by employing a polymeric resin formed from a copolymer of (meth) acrylic acid, esters of (meth) acrylic acid having a sulphonic acid group and (meth) acrylamide.

WO 2005/066229 discloses an amphoteric cross-linked polymer comprising vinyl monomer containing tertiary amino group, vinyl monomer containing carboxyl group and a vinyl monomer containing a sulphonic acid group. The composition is said to absorb at least 50 times in pure water and at least ten times in one molar calcium chloride solution.

JP 2003 041065 describes a water absorbing material for water swelling rubber comprising a copolymer of polyacidic amino acid anhydride having in the molecule at least one ethylenically unsaturated double bond and a compound having a sulphonate containing ethylenically unsaturated double bond and/or a compound having a sulphonate salt in which the average size of particles is up to 100 microns. The water swelling rubber is said to remain stable for long periods even in contact with polyvalent metal ions such as seawater and hard water.

JP 2004 331851 provides a water sealing agent that is suitable for the prevention of cement water leakage in civil engineering and building construction. The water absorptive resin is obtained by polymerisation of between 30 and 80% acrylic acid with an ethylenically unsaturated sulphonic acid monomer which is either an acrylamide derivative or an acrylic acid ester and cross-linking agent. The polymer has an average particle diameter of between 1 and 50 microns.

JP 02016189 discloses a water stopping agent which permits temporary water stopping in civil engineering works and is applicable to seawater. A gelling agent such as aluminium citrate is added to a water-soluble copolymer comprising a sulphonated vinyl monomer and a carboxylated vinyl monomer.

JP 06001886 describes a water swellable rubber which is said to have stable water absorbing and swelling properties, even when kept in contact with hard water, seawater and the like. The water swelling rubber is obtained by compounding a cross-linked polymer having between 2 and 10 mole% sulpho alkyl (meth) acrylate, between 60 and 88 mole% (meth) acrylamide and between 10 and 38 mole% (meth) acrylic acid compound.

It is often difficult to find the right hydrophilic swelling material for each application, e.g. in civil engineering applications or in conditions where the swelling material is exposed to ocean water, cement water (representative of leachate from concrete), or in very specific situations such as standard water (0.25g/l CaCl₂.2H₂0). Generally, absorbent materials tend to be tailor-made to suit the particular application.

An object for the present invention therefore is to provide water-swellable compositions with improved swell capacity and stability to shrinkage, especially when exposed to 'water that contains electrolyte, such as dissolved salts '. Furthermore, it would be desirable to provide a composition, especially suitable for incorporation into a thermoplastic or elastomeric material, that exhibits more uniform swelling properties in standard water and hard water environments including cement water and ocean water.

Therefore, the present invention is directed to a water-swellable composition obtainable by combining a non-water-swelling thermoplastic or elastomeric polymer and a water-swelling material, comprising
(a) from 5 to 70%, preferably 10 to 60, most preferably from 15 to 50 % by weight of hydrophilic cross-linked polymer microparticles,
(b) from 30 to 95%, preferably 40 to 90, most preferably from 50 to 85% by weight of a water-insoluble thermoplastic polymer, resin or elastomeric material, in which the hydrophilic cross-linked polymer microparticles have a particle volume mean diameter of not more than 20 microns (as determined by laser diffraction technique using a Sympatec Helos H1539 with R1 lens and Quixcel dispersion system),
wherein the hydrophilic polymer microparticles are formed from a monomer blend comprising,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, in which the ratio of i) to ii) is in the range of 0.006:1 to 6:1 (mole basis).

It is possible for the monomer blend to also comprise water soluble ethylenically unsaturated monomer containing carboxylic acid groups selected from the group consisting of acrylic acid_{.} methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably monomer components (i) and (ii) in combination form at least 30 mole% of the monomer blend. More preferably monomer components (i) and (ii) in combination form at least 40 mole% of the monomer blend, more preferably still at least 50 mole% and particularly preferably at least 60 or 70 mole%, especially at least 80 or 90 mole%. It is especially preferred that the combination of monomer components (i) and (ii) form at least 95 mole% and most preferably 100% of the monomer blend.

All subsequently mentioned preferred features regarding the hydrophilic polymer microparticles are applicable to this embodiment of the present invention.

The hydrophilic cross-linked polymer microparticles can be prepared according to the methods described below, i.e. preferably a dispersion is prepared as described below. Usually this dispersion is used for the preparation of the inventive water-swellable composition or the hydrophilic cross-linked polymer microparticles are separated from the dispersion (as described later) and used to prepare the inventive water-swellable composition.

The particle volume mean diameter is described later in more detail.

The thermoplastic polymer, resin or elastomeric material that can be used usually is one that has elastomeric or rubber-like properties or one that gains elastomeric properties on curing or by using a suitable plasticizer. Also the more elastomeric it is in nature the more likely it is to be swellable. Suitable non-swelling polymers include polyethylene-co-vinyl acetate, polyvinyl butyral resin, PVC (polyvinyl chloride), polystyrene, polyacrylics, polyamides, rubbers such as natural rubber, NBR (nitrile-butadiene rubber), SBR (styrene-butadiene rubber), polybutenes, polybutadienes, polyisoprenes, polyisobutylene-isoprene, fluororubber, chloro-sulphonated polyethylene, silicone, polychloroprene, butyl rubbers, EPDM (ethylene-propylene-diene rubber), EPR (ethylene-propylene rubber) and polystyrene-co-isobutylene and resins such as alkyd resins, phenolic resins, aminoplast resins, polyurethane resins, polysulfide rubbers, and acrylic resins. For reverse phase dispersions it is preferable to have a substantial amount of plasticizer fluid present in the elastomeric composition (e.g. PVC, NBR). In case a carrier-free powder product is desired, then plasticized as well as non-plasticized elastomers, preferably PVC and elastomeric rubbers are preferred.

The inventive water-swellable compositions can be prepared by using conventional techniques. For example with the components, including the water-insoluble thermoplastic polymer, resin or elastomeric material, the hydrophilic polymer, as dispersion or as powder, and optional additives as desired can be pre-mixed using a high-shear mixer such as a Banbury mixer. Such high-shear mixing usually generates heat that will soften the base thermoplastic polymer, resin or elastomeric material and promote the dispersion of microparticulate hydrophilic polymer throughout the mixture. Compositions involving thermoplastic polymers such as PVC preferably are further processed into a sheet or shaped article by extrusion, injection moulding or another thermal technique. Rubbers may be processed similarly and are usually cured or vulcanized during this second step at high temperature through the action of a suitable curing or vulcanization aid.

Therefore, another embodiment of this invention relates to a process for the manufacture of the inventive compositions, wherein 5 to 70 % by weight of hydrophilic cross-linked polymer microparticles and 30 to 95 % by weight of water-insoluble thermoplastic polymer, resin or elastomeric material are admixed.

A preferred embodiment of this invention concerns the inventive composition, which contains as further component an additive (c). Examples of additives include e.g. lubricants, process oils, antistatic agents such as glycerol monostearate and glycerol monooleate, ethoxylated alcohol as an antistatic agent and/or fluidizing agent for PVC plastisols, flame retardant, vulcanization accelerators, vulcanization aids, aging retarders, colouring agents such as pigments and dyes, wetting agents, acid scavengers, heat stabilizers, defoamers, blowing agents, fillers such as calcium carbonate, carbon black, clay, silica and additional plasticizers in addition to the plasticizer introduced due to its presence as the carrier fluid of the hydrophilic polymer microparticle.

Such additives (c) can be added in amounts depending on the desired effect, which can easily be determined by a person skilled in the art. Usually the additives are added in amounts in the range of from 1 to 50 % by weight, based on the total amount of the composition.

Therefore, a preferred embodiment is directed to the instant composition further comprising an additive (c), wherein the additive (c) is a lubricant, process oil, antistatic agent, ethoxylated alcohol, flame retardant, vulcanization accelerator, vulcanization aid, aging retarder, colouring agent such as a pigment or a dye, a wetting agent, an acid scavenger, a heat stabilizer, a defoamer, a blowing agent, a filler such as calcium carbonate, carbon black, clay, silica, or an additional plasticizer in addition to the plasticizer introduced due to its presence as the carrier fluid of the hydrophilic cross-linked polymer microparticle.

In another preferred embodiment a further component (d) is added to the inventive composition, either with or without additive (c) in amounts in the range of from 0 to 20% by weight, based on the total amount of the composition. Component (d) usually has the function of a second hydrophilic material such as finely divided sodium or calcium bentonite or silica. Such materials may be used to contribute directly to the expansion of the elastomeric composition or to help transport water to the microparticulate hydrophilic polymer. The use of such materials can be beneficial in the preparation of a waterstop strip optimised in terms of swelling capacity, swelling rate and cost (due to the low cost of hydrophilic minerals).

A further preferred embodiment of this invention relates to the use of the inventive water-swellable compositions as sealant materials for example as waterstops for non-moving construction joints. Generally, the waterstops preferably are in the form of a flexible strip, which usually contain from 10 to 60, preferably 15 to 50 % by weight of the hydrophilic cross-linked polymer microparticles (dry basis) and 20 to 70, preferably 30 to 60 % by weight of water-insoluble thermoplastic polymer, resin or elastomeric material, the rest, which sums up to 100% by weight usually consists of process aids and additives, which in PVC can contain a high proportion, up to 50% by weight, of one or more plasticizers.

Furthermore, the inventive water-swellable compositions can be in the form of coatings, films, fibres, yarns, fabrics, foams, strips, cords and other flexible shaped articles as well as, less flexible shaped articles. Flexible shaped articles are preferred as they can be optimally shaped for their end use application. The water swellable compositions can be useful in many situations where seals are required when in prolonged contact with water. This may for instance include joint sealants, water stops, gaskets, water blocking (including water self repairable) linings etc.

Hence, another embodiment of the instant invention concerns flexible shaped articles such as coatings, films, fibres, yarns, fabrics, foams, strips, and cords.

In addition, the inventive water-swellable compositions are useful for the manufacture of e.g.
- Articles for absorbing free unwanted water or water-based liquids such as spillage mats
- Water-absorbent fibres, yarns or fabrics or textiles for mopping up water or water-based liquids e.g. household applications and applications such as wrappings for cable bundles to protect against water ingress
- Articles such as absorbent fibres, fabrics, films and membranes for use as components of wound dressings to confer greater absorptivity and/or breathability and/or moisture transfer properties as well as wound dressing adhesive, which would have the ability to wick water or moisture away from the skin
- Articles for removing moisture from air to treat moist, humid environments
- Water-swelling seals e.g. waterstops for construction joints, as well as rubber water-swelling oil drilling seals
- Water-swelling mastics, caulks or sealants
- Water swelling coatings or layers attached to, or used in conjunction with, water-resistant membranes, layers or coatings etc; such systems could be used, for example, to provide protection from water ingress should the membrane or coating suffer damage, i.e. the system is "self-healing"
- Moisture vapour permeable films, membranes & coatings e.g. pervaporation membranes, plastisol coated wallcoverings e.g. vinyl wallcoverings, including wallcoverings obtained by laminating a coating or film onto the base paper e.g. using a calendering process
- Adhesives, coatings, mastics, caulks, sealants or films that have the ability to transmit water or water vapour
- Printing rollers with more hydrophilic properties, such that polar fountain solutions have greater affinity for the rollers

In addition, the composition of the present invention can be made from a dispersion comprising
(a) from 30 to 75, preferably from 40 to 75 % by weight of hydrophilic cross-linked polymer microparticles, which are obtainable by a reverse phase polymerization of a monomer blend comprising,
   i) ethylenically unsaturated monomer containing sulphonic acid groups or salts thereof, in which the monomer is an acrylic sulphonic acid having the formula:

      CH₂=CR (CO) -(NH)-Y-SO₃M

      wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
   ii) non-ionic water-soluble ethylenically unsaturated monomer, in which the ratio of i) to ii) is in the range of 0.006:1 to 6:1 (mole basis), selected from the group consisting of acrylamide, methacrylamide, N,N-di(C₁₋C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile,
   and wherein the hydrophilic cross-linked polymer microparticles have a volume mean diameter of less than 20 microns (as determined by laser diffraction technique using a Sympatec Helos H1539 with R1 lens and Quixcel dispersion system),
(b) from 25 to 70, preferably from 25 to 60 % by weight of a water-immiscible carrier fluid.

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably monomer components (i) and (ii) in combination form at least 30 mole% of the monomer blend. More preferably monomer components (i) and (ii) in combination form at least 40 mole% of the monomer blend, more preferably still at least 50 mole% and particularly preferably at least 60 or 70 mole%, especially at least 80 or 90 mole%. It is especially preferred that the combination of monomer components (i) and (ii) form at least 95 mole% and most preferably 100% of the monomer blend.

Preferably the dispersion comprises
(a) from 30 to 75, preferably from 40 to 75 % by weight of hydrophilic cross-linked polymer microparticles, which are obtainable by a reverse phase polymerization of a monomer blend comprising,
   i) ethylenically unsaturated monomer containing sulphonic acid groups or salts thereof, in which the monomer is an acrylic sulphonic acid having the formula:

      CH₂=CR (CO) -(NH)-Y-SO₃M

      wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
   ii) non-ionic water-soluble ethylenically unsaturated monomer, selected from the group consisting of acrylamide, methacrylamide, N,N-di(C₁-C₈alkyl) (meth)acrylamide, N-C₁-C₈alkyl) (meth) acrylamide, vinyl alcohol, vinyl acetate, allyl alcohol, hydroxyethyl methacrylate, hydroxyethyl acrylate and acrylonitrile, in which the ratio of i) to ii) is in the range of 0.006:1 to 6:1 (mole basis),
   and wherein the hydrophilic cross-linked polymer microparticles have a volume mean diameter of less than 20 microns (as determined by laser diffraction technique using a Sympatec Helos H1539 with R1 lens and Quixcel dispersion system),
(b) from 25 to 69.5, preferably from 25 to 58.5 % by weight of a water-immiscible carrier fluid,
(c) from 0 to 25 %, preferably 1.5 to 15 % by weight of other components as desired such as primary emulsifier, stabilizing polymer and activator, wherein the total amount of components (a), (b) and (c) adds up to 100 % by weight.

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably monomer components (i) and (ii) in combination are present in the monomer blend in an amount as defined above.

As water-soluble, ethylenically unsaturated nonionic monomers the monomers are selected from the group consisting of acrylamide, methacrylamide, N,N-di(C₁-C₈alkyl) (meth)acrylamide such as N,N-dimethylacrylamide, N-(C₁-C₈alkyl) (meth) acrylamide such as N- methyl acrylamide, vinyl alcohol, vinyl acetate, allyl alcohol, hydroxyethyl methacrylate, hydroxyethyl acrylate and acrylonitrile. Preferably the non-ionic monomers are acrylamide and methacrylamide.

The ethylenically unsaturated monomer containing sulphonic acid groups are selected from acrylic sulphonic acid having the formula:

CH₂=CR (CO) -(NH)-Y-SO₃M

wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group.

Suitable sulphonic acid monomers include 2-acrylamido-2-methyl propane sulphonic acid, 2-methacrylamido-2-methyl propane sulphonic acid, 2-acrylamidopropane sulphonic acid, 2-methacrylamidopropane sulphonic acid, 2-acrylamidobutane sulphonic acid, 2-methacrylamidobutanesulphonic acid, 1-acrylamido-2-methyl propane sulphonic acid, 1-methacrylamido-2-methyl propane sulphonic acid, including alkali metal and ammonium salts thereof, especially sodium salts. A preferred monomer includes 2-acrylamido-2-methyl propane sulphonic acid and the alkali metal salts, especially sodium salt.

Should the monomer blend contain an ethylenically unsaturated carboxylic acid monomer, the amount of ethylenically unsaturated carboxylic acid (or salts thereof) can be a maximum of 50 mole%. Preferably the amount of ethylenically unsaturated carboxylic acid monomer should be less than 40 mole%, more preferably less than 20 mole% and even more preferably less than 8 mole%. It is particularly preferred that the amount of carboxylic acid monomer will be below 6 mole% and even more particularly preferred that it is below 4 or 5 mole%, especially below 1 or 2 mole%. Most preferably, the monomer blend will not contain any carboxylic acid monomer.

Other ethylenically unsaturated monomers can be selected from any suitable monomer which is copolymerisable with the blend of non-ionic and sulphonated monomers. In general this will mean that the other monomer is soluble in the monomer blend, i.e. having a solubility in the monomer blend of at least 5g by total weight of 100 ml monomer blend at 25°C. The monomer may be non-ionic, anionic or cationic. When the monomer is cationic it can for instance be selected from any of N,N-di-C₁-C₈alkylamino-C₁-C₈alkylacrylate such as N,N-dimethyl amino ethyl acrylate, N,N-di-C₁-C₈alkylamino-C₁-C₈alkylmethacrylate such as N,N-dimethyl amino ethyl methacrylate, including quatemised forms e.g. methyl chloride quatemised forms, diallyldimethyl ammonium chloride, N,N-di-C₁-C₈alkylamino-C₁-C₈alkylacrylamide and the quatemised equivalents such as acrylamidopropyl trimethyl ammonium chloride. C₁-C₈alkyl usually stands for methyl, ethyl, n-, i-propyl, n-, i-, sec.- or tert. butyl, n-pentyl, n-hexyl, n-heptyl, n-octyl, or 2-ethyl-hexyl.

The other ethylenically unsaturated monomers may include other non-ionic monomers, for instance acrylic esters, vinyl chloride, styrene and styrene derivatives.

Other ethylenically unsaturated monomers may be anionic monomers, such as ethylenically unsaturated monomers containing phosphates, phosphonates, sulphonates or sulphates e.g. allyl phosphonic acid, and vinyl phosphonic acid.

The other ethylenically unsaturated monomers may include a mixture of two or more of the aforementioned other monomers.

The monomer blend should not contain more than 50 mole% of other monomer and usually not more than 20 mole% and preferably the amount of other monomer should be less than 10% and more preferably below 5% and more desirably still should be below 1 or 2 mole%. Most preferably the amount of other monomer contained in the monomer blend will be zero.

Preferably the hydrophilic cross-linked polymer microparticles are obtainable by a reverse phase polymerization of a monomer blend consisting essentially of,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, in which the ratio of i) to ii) is in the range of 0.006:1 to 6:1 (mole basis).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

In one more preferred form the hydrophilic cross-linked polymer microparticles are formed from a monomer blend comprising,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate allyl alcohol, hydroxyethyl methacrylate, hydroxyethyl acrylate and acrylonitrile,
where the ratio of i) to ii) is in the range of 0.006:1 to 0.38:1 (mole basis), more preferably 0.016:1 to 0.3:1 (mole basis) and most preferably 0.034:1 to 0,3:1 (mole basis).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably the amount of ethylenically unsaturated carboxylic acid monomer should be less than 40 mole%, more preferably less than 20 mole% and even more preferably less than 8 mole%. It is particularly preferred that the amount of carboxylic acid monomer will be below 6 mole% and even more particularly preferred that it is below 4 or 5 mole%, especially below 1 or 2 mole%. Most preferably, the monomer blend will not contain any carboxylic acid monomer.

The monomer blend should not contain more than 50 mole% of other monomer and usually not more than 20 mole% and preferably the amount of other monomer should be less than 10% and more preferably below 5% and more desirably still should be below 1 or 2 mole%. Most preferably the amount of other monomer contained in the monomer blend will be zero.

Preferably monomer components (i) and (ii) in combination are present in the monomer blend in an amount as defined above.

In another more preferred form the hydrophilic cross-linked polymer microparticles are formed from a monomer blend comprising,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl (meth)acrylamide, N(₁-C₈alkyl) (meth) acrylamide, vinyl alcohol, vinyl acetate, allyl alcohol, hydroxyethyl methacrylate, hydroxyethyl acrylate and acrylonitrile, in which the ratio of i) to ii) is in the range of 0.2:1 to 6:1 (mole basis), more preferably 0.25:1 to 2.8:1 (mole basis) and most preferably 0.3:1 to 2.8:1 (mole basis).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably the amount of ethylenically unsaturated carboxylic acid monomer should be less than 40 mole%, more preferably less than 20 mole% and even more preferably less than 8 mole%. It is particularly preferred that the amount of carboxylic acid monomer will be below 6 mole% and even more particularly preferred that it is below 4 or 5 mole%, especially below 1 or 2 mole%. Most preferably, the monomer blend will not contain any carboxylic acid monomer. The monomer blend should not contain more than 50 mole% of other monomer and usually not more than 20 mole%. and preferably the amount of other monomer should be less than 10% and more preferably below 5% and more desirably still should be below 1 or 2 mole%. Most preferably the amount of other monomer contained in the monomer blend will be zero.

In an even more preferred form the hydrophilic cross-linked polymer microparticles are formed from a monomer blend comprising,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, where the ratio of i) to ii) is in the range of 0.06:1 to 0.38:1 (mole basis), more preferably 0.016:1 to 0.3:1 (mole basis) and most preferably 0.034:1 to 0.3:1 mole basis).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxyl monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably the amount of ethylenically unsaturated carboxylic acid monomer should be less than 40 mole%, more preferably less than 20 mole% and even more preferably less than 8 mole%. It is particularly preferred that the amount of carboxylic acid monomer will be below 6 mole% and even more particularly preferred that it is below 4 or 5 mole%, especially below 1 or 2 mole%. Most preferably, the monomer blend will not contain any carboxylic acid monomer. The monomer blend should not contain more than 50 mole% of other monomer and usually not more than 20 mole%. and preferably the amount of other monomer should be less than 10% and more preferably below 5% and more desirably still should be below 1 or 2 mole%. Most preferably the amount of other monomer contained in the monomer blend will be zero.

In an another even more preferred form the hydrophilic cross-linked polymer microparticles are formed from a monomer blend comprising,
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N.N-di(C₁-C₈alkyl) (meth)acryamide, N-(C₁-C₈alkyl) (meth) acrylamide, vinyl alcohol, vinyl acetate, allyl alcohol, hydroxyethyl methacrylate, hydroxyethyl acrylate and acrylonitrile, where the ratio of i) to ii) is in the range of 0.2:1 to 6:1 (mole basis), more preferably 0.25:1 to 2.8:1 (mole basis) and most preferably 0.3:1 to 2.8:1 (mole basis).

Preferably monomer components (i) and (ii) in combination are present in the monomer blend in an amount as defined above.

Especially preferred hydrophilic cross-linked polymer microparticles are formed from a monomer or monomer blend in which the sulphonic acid monomer is sodium salt of 2-acrylamido-2-methyl propane sulphonic acid and the water-soluble non-ionic monomer is acrylamide and cross-linking agent is methylene bis acrylamide. The above preferred ratios of monomers would also be applicable to the monomer blend.

A preferred embodiment of this invention concerns hydrophilic cross-linked polymer microparticles, which are obtained from the above mentioned monomers, and wherein the amount of anionic monomers is not zero, in which the acid groups are partially or fully neutralized. Preferably the degree of neutralization is chosen in the range of from 50 to 100%, more preferably from 75 to 100% (on a molar basis). The neutralization can be carried out by known methods such as applying bases to the corresponding acidic groups carrying hydrophilic polymer microparticles. The usual, most convenient practice is to neutralize the monomers prior to carrying out the polymerization reaction. Such bases suitable for neutralizing the acidic monomers can be e.g. alkali metal hydroxides such as NaOH or KOH as well as ammonia or amines such as mono-, di- or tri-ethanolamine, most preferably NaOH is chosen.

The hydrophilic polymer microparticles are crosslinked and cross-linking can be achieved in a number of ways, which will be clear to those skilled in the art. It is possible to achieve cross-linking by polymerising the monomer blend in the presence of a multifunctional cross-linking monomer. A typical multifunctional cross-linking monomer can be for instance a di-, tri-or tetra-ethylenically unsaturated monomer. Alternatively the cross-linking of the hydrophilic polymeric microparticles can be obtained using additives, such as di- or polyvalent metal cations such as Zr³⁺ (e.g. Bacote™ 20), organic diamines, triamines etc, aldehyde compounds, such as glyoxal and other known cross-linking compounds. Preferably, cross-linking is achieved using a cross-linking monomer. Suitable cross-linking monomers include for instance methylene bis acrylamide, diacrylamido acetic acid, polyol (meth) acrylates such as pentaerythritol tri (meth) acrylate or ethylene glycol di (meth) acrylate and tetra allyl ammonium chloride. Preferably an amount of cross-linking monomer is chosen to give a polymer, which is water insoluble and water swelling, whilst avoiding excessive structuring, which would restrict the water absorbency of the hydrophilic polymer microparticle and the inventive composition comprising such polymer microparticles or dispersions thereof. In general, a suitable level of cross-linking monomer can be chosen in the range of 5 ppm to 5%, preferably from 7.5 ppm to 5000 ppm and most preferably from 10 ppm to 1000 ppm based on total weight of the aforementioned chosen monomer blend.

The desired level of cross-linking monomer usually depends on the chain length (or molecular weight) of the polymer chain segments of the cross-linked polymer. For example it is possible to control the chain length of the hydrophilic polymer microparticle using a chain-transfer reagent, which tends to give shorter chains. The use of certain low reactivity monomers may also give shorter chains. The chain length can also be controlled to some degree by the choice and amount of initiator used for the polymerization. Where conditions are used that would be expected to give shorter chain lengths, higher levels of cross-linking monomer may be used to give the appropriate degree of structuring of the cross-linked hydrophilic microparticle.

Preferably the dispersions are obtainable by reverse phase polymerization, i.e. a technique that is well known from the prior art, for example described and discussed in WO 97/34945. The polymers may be produced as a water-in-oil emulsion or dispersion by water-in-oil emulsion polymerisation.

In the instant invention, usually an aqueous monomer phase is prepared comprising the chosen monomers and water. If desired optionally a small amount of a complexing agent such as EDTA is used to scavenge any free metal ions that otherwise may adversely interfere with the polymerization reaction. In addition, a carrier or oil phase is prepared optionally containing a plasticizer, for example di-isodecyl phthalate, a volatile oil such as a mixture of hydrocarbons, a primary emulsifier and optionally a polymeric stabiliser. The monomer and oil phases are mixed together using a suitable homogeniser, such as a Silverson homogeniser or high-pressure homogeniser, to form a fine and stable emulsion of the aqueous monomer in the carrier phase. The polymerization of this homogenized, unpolymerised emulsion is then preferably initiated with a suitable initiator such as a redox couple and/or thermal and/or photo initiator. After the polymerization step water and the volatile oil are then removed from the emulsion/dispersion e.g. by distillation.

Further complexing agents can be homologues of EDTA such as diethylene triamine penta-acetic acid or methylene phosphonate complexing agents such as diethylene-triamine-penta-methylene phosphonate.

The complexing agent is usually applied in a range of from 0.01 to 0.5 % by weight based on the weight of monomers.

Therefore, a process for the manufacture of dispersions, which comprises
(I) admixing blend of monomers comprising,
   i) ethylenically unsaturated monomer containing sulphonic acid groups or salts thereof, in which the monomer is an acrylic sulphonic acid having the formula:

      CH₂=CR (CO) -(NH)-Y-SO₃M

      wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
   ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, in which the ratio of i) to ii) is in the range of 0.006:1 to 6:1 (mole basis),
   water, an initiator, a water-immiscible carrier fluid, a volatile oil, and an emulsifier, as well as optionally further additives such as a complexing agent or polymeric stabilizer,
(II) carrying out a reverse phase polymerization,
(III) removing water and volatile oil,
wherein the thus obtained hydrophilic cross-linked polymer microparticles have a volume mean diameter of less than 20 microns (as determined by laser diffraction technique using a Sympatec Helos H1539 with R1 lens and Quixcel dispersion system).

It is possible for the monomer blend to also comprise water soluble ethylenically unsaturated monomer containing carboxylic acid groups or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably monomer components (i) and (ii) in combination are present in the monomer blend in an amount as defined above.

Generally, the hydrophilic cross-linked polymer microparticles have a volume mean diameter (VMD) of not more than 20 microns, preferably not more than 10 microns, more preferably not more than 5 microns. Normally the microparticles will have a mean diameter of at least 0.3 microns. Most preferably they will have a mean diameter of between 0.6 and 2.0 microns. VMD is determined by laser diffraction technique using a Sympatec Helos H1539 with R1 lens and Quixcel dispersion system.

A person skilled in the art usually knows several ways to control particle-size. One way is through the selection and amount of the primary emulsifier for the aqueous monomer-in-oil emulsion. Usually the primary emulsifier has an HLB in the range 1 to 5. An example of a primary emulsifier is sorbitan mono-oleate (e.g. SPAN 80®, CAS 1338-43-8, HLB 4.3). The amount of primary emulsifier required to achieve the desired particle-size is generally in the range of 0.5 to 15 % by weight on the weight of the aqueous monomer phase, but is dependent on a number of factors such as homogenization equipment and conditions, the nature of the aqueous phase and oil phase as well as the emulsifier itself, as there are numerous emulsifiers to select from. Usually the amount of primary emulsifier will be in the range of 1 to 10 %, most preferably from 2 to 5 %.

In some cases, the water-immiscible carrier fluid ("carrier") may comprise a plasticizer, which is a low viscosity oily fluid often conventionally used as an additive in plastics, rubbers and generally in the preparation of elastomeric materials. In one preferred form the carrier will be a plasticizer, which may be used in combination with another compatible oily fluid that is an additive of elastomeric compositions such as process oil or lubricant. However, in another preferred form the carrier is not a plasticiser, although it may be considered to be a process oil. Typically such a non-plasticising carrier can be a low viscosity oily fluid.

Generally, the carrier is chosen to be low in viscosity in order to facilitate the preparation of reverse phase dispersions containing a maximum concentration of hydrophilic polymer. Preferably the carrier is non-toxic and non-polluting. Suitable carriers are usually inert and as such will not adversely interfere with the polymerization reaction during the preparation of the hydrophilic cross-linked polymer microparticles. Preferable carriers include, but are in no way restricted to, alkyl esters of aliphatic dicarboxylic acids such as adipic acid C₁-C₁₀ alkyl esters including diethyl adipate, dibutyl adipate, dipropyl adipate, dihexyl adipate, dioctyl adipate and di-isononyl adipate, pimelic acid esters, suberic acid esters, azelaic acid esters, sebacic acid esters and esters of higher molecular weight aliphatic dicarboxylic acids, alkyl esters of aliphatic tricarboxylic acids such as citric acid esters including tributyl citrate, acetyltributyl citrate, acetyltriethyl citrate, acetyltrihexyl citrate and butyryltrihexyl citrate and trimellitic acid esters such as trioctyl trimellitate, C₈-C₂₀ alkyl esters of phthalic acid including di-isononylphthalate, di-isodecylphthalate and di-undecylphthalate, liquid polyester plasticisers, and mixtures thereof. Most preferred are esters of aliphatic dicarboxylic acids, in particular C₁-C₁₀ alkyl esters of aliphatic C₂-C₁₀ alkyl di- and tricarboxylic acids and C₈-C₂₀ alkyl esters of phthalic acid.

Wherein C₈-C₂₀ alkyl stands for e.g. n-octyl, 2-ethyl-hexyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-eicosyl.

C₁-C₁₀ alkyl stands for e.g. methyl, ethyl, n-, i-propyl, n-, i-, sec.- or tert. butyl, n-pentyl, n-hexyl, n-heptyl, n-octyl, 2-ethyl-hexyl, n-nonyl, n-decyl. C₂-C₁₀ alkyl stands for e.g. ethyl, n-, i-propyl, n-, i-, sec.- or tert. butyl, n-pentyl, n-hexyl, n-heptyl, n-octyl, 2-ethyl-hexyl, n-nonyl, n-decyl.

Hydrocarbon oils such as mineral oil (light or heavy), petrolatum (yellow or white), microcrystalline wax, paraffinic and isoparaffinic compounds, hydrogenated isoparaffinic molecules as polydecenes, and polybutene, hydrogenated polyisobutene, squalane, isohexadecane, isododecane and others from plant and animal kingdom can also be used.

Other possible carriers include, but are in no way limited to ester oils such as: isopropylmyristate, isopropylpalmitate, isopropylstearate, isopropyl isostearate, isopropyloleate, n-butylstearate, n-hexyllaurate, n-decyloleate, isooctylstearate, iso-nonylstearate, isononyl isononanoate, 2-ethylhexylpalmitate, 2- hexyllaurate, 2-hexyldecylstearate, 2-octyldodecylpalmitate, oleyloleate, oleylerucate, erucyloleate, erucylerucate, cetearyl octanoate, cetyl palmitat, cetyl stearate, cetyl oleate, cetyl behenate, cetyl acetate, myristyl myristate, myristyl behenate, myristyl oleate, myristyl stearate, myristyl palmitat, myristyl lactate, propylene glycol dicaprylate/caprate, stearyl heptanoate, diisostearyl malate, octyl hydroxystearate, etc.

Natural or synthetic triglycerides including glyceryl esters and derivatives. Di- or tri- glycerides, based on C₆-C₁₈ fatty acids, modified by reaction with other alcohols (caprylic/capric triglyceride, wheat germ glycerides, etc.). Fatty acid esters of polyglycerin (polyglyceryl-n such as polyglyceryl-4 caprate, polyglyceryl-2 isostearate, etc. or castor oil (Ricinus Communis), hydrogenated vegetable oil, sweet almond oil, wheat germ oil, sesame oil, hydrogenated cottonseed oil, coconut oil, avocado oil, corn oil, hydrogenated castor oil, shea butter, cocoa butter, soybean oil, mink oil, sunflower oil, safflower oil, macadamia nut oil, olive oil, hydrogenated tallow, apricot kernel oil, hazelnut oil, borago oil, etc.

Waxes including esters of long-chain acids and alcohols as well as compounds having wax-like properties, e. g. , carnauba wax (Copernicia Cerifera), beeswax (white or yellow), lanolin wax, candellila wax (Euphorbia Cerifera), ozokerite, japan wax, paraffin wax, microcrystalline wax, ceresin, cetearyl esters wax, synthetic beeswax, etc. Also, hydrophilic waxes as Cetearyl Alcohol or partial glycerides.

Silicones or siloxane (organosubstituted polysiloxanes) such as: dimethylpolysiloxanes, methylphenylpolysiloxanes, cyclic silicones, and also amino-, fatty acid-, alcohol-, polyether-, epoxy-, fluorine-, glycoside-and/or alkyl-modified silicone compounds, which at room temperature may be in either liquid or resinous form. Linear polysiloxanes : dimethicone such as Dow Corningo 200 fluid, Mirasile DM (Rhodia), dimethiconol. Cyclic silicone fluids : cyclopentasiloxanes volatiles such as Dow Corning@ 345 fluid, Silbione@ grade, Abri) grade.

Phenyltrimethicone ; Dow coming@ 556 fluid. Also suitable are simethicones, which are mixtures of dimethicones having an average chain length of from 200 to 300 dimethylsiloxane units with hydrogenated silicates.

Nonvolatile organopolysiloxanes as disclosed by US 5637306 (column 2, line 12-column 4, line 5). Such nonvolatile organopolysiloxane are selected from the group consisting of polyalkylsiloxanes, polyarylsiloxanes, polyalkylarylsiloxanes, modified and unmodified polysiloxanes, silicone gums and resins, and organomodified polysiloxanes, with the exception of polysiloxanes carrying polyethyleneoxy and/or polypropyleneoxy or carboxylate or bisulfite groups organopolysiloxane.

Preferred dispersions comprise a further component (c1), i.e. a stabilizing amphiphilic copolymer, which leads to an improved thermal and/or shear stability. The preparation of the reverse phase dispersions of the hydrophilic cross-linked polymer microparticles of this invention preferably involves a step whereby the water-containing precursor to the final dispersion product undergoes a water or water/solvent azeotrope removal step by vacuum distillation or flash distillation or other thermal methods. It cannot be excluded that the dispersion is destabilized by this removal step, especially when the aim is to achieve a high concentration of disperse phase particles in the final dispersion product, and when the removal step comprises flash distillation such as thin film evaporation. For this reason it is advantageous to add a stabilizing amphiphilic copolymer. In addition, it has been found, too, that the stabilizing amphiphilic copolymer also allows obtaining a higher concentration of disperse phase in the final product than would otherwise be possible.

Suitable stabilizing amphiphilic copolymers usually contain both hydrophobic and hydrophilic groups in the same copolymer. Preferred amphiphilic stabilizing copolymers are obtainable by polymerizing from 50 to 90 % by weight of one or more water-immiscible alkyl (meth)acrylates monomers and from 10 to 50 % by weight of one or more acidic, basic or quaternary amine monomers.

Preferred alkyl (meth)acrylates are C₁-C₂₀ alkyl esters of acrylic acid or methacrylic acid, preferably mixtures thereof containing at least 20% by weight (on total monomer weight) of one or more C₁₂-C₂₀ alkyl esters of acrylic acid or methacrylic acid.

C₁-C₂₀ alkyl stands for e.g methyl, ethyl, n-, i-propyl, n-, i-, sec.- or tert. butyl, n-pentyl, n-hexyl, n-heptyl, n-octyl, 2-ethyl-hexyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-eicosyl.

C₁₂-C₂₀ alkyl stands for e.g. n-dodecyl, n-tridecyl, n-tetradecyl, n-pentadecyl, n-hexadecyl, n-heptadecyl, n-octadecyl, n-nonadecyl, n-eicosyl.

Preferred acidic monomers are acrylic acid and methacrylic acid.

Examples of basic monomers are N,N-di-C₁-C₈alkylamino-C₁-C₈alkylacrylate such as N,N-dimethyl amino ethyl acrylate, N,N-di-C₁-C₈alkylamino-C₁-C₈ alkylmethacrylate such as N,N-dimethyl amino ethyl methacrylate, or N,N-di-C₁-C₈ alkylamino-C₁-C₈alkylacrylamide.

Particularly preferred stabilizing amphiphilic copolymers are prepared by polymerizing 0 to 25% by weight of one or more C₁-C₁₀ alkyl esters of acrylic or methacrylic acid, 25% to 90% by weight of one or more C₁-C₁₀ alkyl esters of acrylic acid or methacrylic acid and 10% to 25% by weight of acrylic acid or methacrylic acid.

Such stabilizers are known in the prior art or can be manufactured by known methods. An example of a commercially available stabilizer is e.g. Hypermer™ (supplied by Croda).

The stabilizing amphiphilic copolymers can be prepared e.g. by free radical polymerization of the monomers dissolved in a suitable low viscosity oily fluid. Preferably the oily fluid is one that is used in the preparation of the reverse phase dispersion product e.g. it may be a volatile oil such as Exxsol D40 or a plasticizer of the reverse phase dispersion product. Oil soluble thermal initiators can be employed to induce polymerization of the monomers.

The stabilizing amphiphilic copolymer usually is added in amounts of from 0 to 10, preferably 0.5 to 5% by weight based on the total amount of aqueous monomer phase.

It has been found, that it is advantageous for the concentration of hydrophilic cross-linked polymer microparticles in the final reverse phase dispersion to be as high as possible as this is beneficial to productivity, storage and formulation flexibility when used in the inventive water-swellable compositions. One particular advantage of the highly concentrated dispersion is that it enables high concentrations of microparticles to be added without over addition of carrier liquid, which may otherwise lead to undesirable properties of the final elastomer. The highly concentrated dispersions reduce the risk of adding too much of the attendant carrier fluid. Such over addition of the carrier fluid may adversely affect the physical properties, for example mechanical properties, of the elastomeric compositions.

In general, the viscosity of the inventive dispersion increases as the hydrophilic polymer microparticle concentration increases. However, a dispersion that is very high in viscosity usually is difficult to handle and to process when preparing the inventive water-swellable compositions. According to present observations, when the viscosity is too low, problems may arise due to settlement or sedimentation of the hydrophilic cross-linked polymer microparticle. Therefore a need existed to tailor the viscosity (and hence concentration) in order to provide the maximum possible concentration of hydrophilic cross-linked polymer microparticle in the inventive dispersion that is suitably fluid and handleable. Preferably the viscosity of the inventive dispersion is chosen in the range of from 100 cP to 10000 cP, more preferably from 500 cP to 5000 cP at 25°C using a Brookfield RVT viscometer with spindle 3 at a rotational speed of 10 rpm to 50 rpm, usually 20 rpm is found to be satisfactory.

Therefore, a preferred embodiment relates to dispersions comprising a stabilizing amphiphilic copolymer, in which the concentration of hydrophilic cross-linked polymer microparticles is at least 30%, preferably at least 40% and most preferably at least 45 up to 75 % by weight of the finished dispersion.

Another preferred embodiment of the instant invention relates to the instant dispersions, which contain as additional component (c2) an oil-in-water emulsifier, which is sometimes also called an "activator". Preferably an activator is chosen, which has a hydrophilic-lipophilic balance (HLB) value in the range of 9 to 20 depending on the nature of the carrier phase. Examples of such activators are e.g. alkyl phenol ethoxylates such as nonyl phenol ethoxylate, or alkyl alcohol ethoxylates such as linear C₁₂-C₁₄ alkyl alcohol 7 mole ethoxylate.

In general, when the oil-based dispersion is mixed with water, the effect of the activator is to emulsify the oily carrier fluid into the water phase, releasing the hydrophilic polymer microparticle to dissolve in the water phase. This usually causes the water phase to increase in viscosity due to the dissolution or swelling of the hydrophilic polymer microparticle. The rate of activation, or hydrophilic polymer microparticle dissolution or swelling, generally can be controlled by the nature and concentration of activator. In one preferred embodiment, from 3 to 8 % by weight of activator (based on the weight of the dispersion) is chosen. However, it has been found that the dispersion of this invention does not benefit from the addition of an activator for its intended use in preparing the inventive water-swellable compositions.

Still another preferred form of the dispersions comprise as further component (c3) an active ingredient. Preferably the active ingredient is a water-soluble or dispersible compound or composition that is insoluble in the carrier fluid of the dispersion. In this case the active ingredient preferably is present in the hydrophilic cross-linked polymer microparticles.

Until now two main methods are generally known to form a reverse phase dispersion of hydrophilic cross-linked polymer microparticles containing a water-soluble or water-dispersible active ingredient. One method involves adding an aqueous solution or dispersion of the active ingredient to the reverse phase hydrophilic polymer microparticle dispersion, in which case the active ingredient is absorbed into the hydrophilic polymer microparticles. The resulting product can be the final product or water (introduced with the active ingredient) may be removed by e.g. vacuum distillation to give the final product.

Another method involves carrying out the reverse phase polymerization in the presence of the active ingredient, i.e. the active ingredient is dissolved or dispersed in the aqueous monomer solution prior to commencing the polymerization. In this case, the active ingredient preferably is not adversely affected by components of the aqueous monomer phase or polymerization additives nor should the active ingredient adversely affect the polymerization reaction. The latter incorporation method is preferred for convenience. E.g. an active ingredient can be a protective agent such as protecting against UV degradation, thermal degradation, biological fouling, fungal problems etc., or it can be a fragrance, pesticide, herbicide, antistatic agent, fire retarding agent etc.

In case the active ingredient is an antibacterial agent, it is usually used to protect the hydrophilic polymer and other additives of the inventive composition against detrimental bacterial activity during use of the inventive composition.

In general, the amount of the active ingredient depends on the desired effect, and, hence, can be easily determined by a person skilled in the art.

It can be advantageous that the carrier fluid of the reverse phase dispersion is removed so that the hydrophilic cross-linked polymer microparticles are substantially free of carrier fluid and are therefore in a powder, paste, damp cake or granular form, which possibly may contain residues of the carrier fluid.

Therefore, the present invention is also directed to a hydrophilic cross-linked polymer microparticle, which usually is obtainable by a reverse phase polymerization of monomer blend comprising
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate allyl alcohol, hydroxyethyl methacrylate hydroxyethyl acrylate and acrylonitrile, in which the ratio of i) to ii) is in the range of 0.006:1 to 6:1 (mole basis), wherein the cross-linked polymer microparticles have a volume mean diameter of not more than 20 microns (as determined by laser diffraction technique using a Sympatec Helos H1539 with R1 lens and Quixcel dispersion system).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

The description of the polymerization as well as the monomers and cross-linker etc. are the same as for the description of the inventive dispersions.

As far as the preparation of the polymer mcroparticles are concerned, generally in a first step an dispersion as described above is prepared, then the carrier fluid is separated by known methods e.g. by spray-drying, filtration, e.g. microfiltration, or solvent-induced solid/liquid separation, e.g. precipitation by the addition of a solvent, which causes the polymer microparticles to aggregate and sediment.

Therefore, another embodiment of this invention relates to a process for the manufacture of the instant polymer microparticle, which comprises separating the water-immiscible carrier fluid from the instant dispersions.

The polymer microparticles, which are preferably hydrophilic, are usually obtained in the form of agglomerates of primary particles that can be largely deagglomerated by the shear forces involved in preparing elastomeric compositions, or by the deliberate inclusion of a comminution step or by deliberately using more intensive processing conditions to achieve the necessary deagglomeration. Preferably the primary particles are weakly agglomerated so that deagglomeration is achieved without resorting to exceptional process conditions. It is advantageous that the particles are weakly agglomerated to avoid or minimize the respiratory hazard that would attend dry powder composed substantially of primary particles with a volume mean diameter of 20 microns or below.

In a further embodiment the invention relates to a water-swellable composition obtainable by combining a non-water-swelling thermoplastic or elastomeric polymer and a water-swelling material, comprising
(a) from 5 to 70%, preferably 10 to 60, most preferably from 15 to 50 % by weight of hydrophilic cross-linked polymer microparticles,
(b) from 30 to 95%, preferably 40 to 90, most preferably from 50 to 85% by weight of a water-insoluble thermoplastic polymer, resin or elastomeric material, in which the hydrophilic polymer microparticles have a particle volume mean diameter of not more than 20 microns (as determined by laser diffraction technique using a Sympatec Helos H1539 with R1 lens and Quixcel dispersion system),
wherein the hydrophilic cross-linked polymer microparticles are a blend of at least two polymers in which at least one polymer is formed from a monomer or monomer blend comprising ethylenically unsaturated monomer containing sulphonic acid groups or salts thereof, and optionally non-ionic water-soluble ethylenically unsaturated monomer, selected from the group consisting of acrylamide, methacrylamide, N,N-di(C₁-C₈alkyl) (meth)acrylamide. N-(C₁-C₈alkyl) (meth) acrylamide, vinyl alcohol, vinyl acetate, allyl alcohol, hydroxyethyl methacrylate, hydroxyethyl acrylate and acrylonitrile, and
optionally other ethylenically unsaturated monomer and in which at least one further polymer is formed from a monomer or monomer blend comprising non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and-acrylonitrile, and
optionally ethylenically unsaturated monomer containing sulphonic acid groups or salts thereof, and optionally other ethylenically unsaturated monomer and in which the total combination of blended polymers provide an equivalent amount of monomer components of
i) ethylenically unsaturated monomer containing sulphonic acid groups or salts thereof, in which the monomer is an acrylic sulphonic acid having the formula:

   CH₂=CR (CO) -(NH)-Y-SO₃M

   wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, in which the equivalent amount of monomer components has the ratio of i) to ii) in the range of 0.006:1 to 6:1 (mole basis).

It is possible for the monomer blend to also comprise water soluble ethylenically unsaturated monomer containing carboxylic acid groups selected from the group consisting of acrylic acid, methacrylic acid, itaconic acid, maleic acid and fumaric acid or salts thereof. Suitably the monomer blend may comprise this carboxylic monomer in an amount up to 50 mole%. It is also possible for the monomer blend to comprise other ethylenically unsaturated monomer. Suitably the monomer blend may comprise this other ethylenically unsaturated monomer in an amount up to 50 mole%.

Preferably, the total combination of blended polymers provide an equivalent amount of monomer components such that amount of monomer components (i) and (ii) in combination form at least 30 mole% of the monomer blend. More preferably the monomer components (i) and (ii) in combination form at least 40 mole% of the equivalent amount of monomer components of the total combination of blended polymers, more preferably still at least 50 mole% and particularly preferably at least 60 or 70 mole%, especially at least 80 or 90 mole%. It is especially preferred that the combination of monomer components (i) and (ii) form at least 95 mole% and most preferably 100% of the equivalent amount of monomer components of the total combination of blended polymers.

By equivalent amount of monomer components, we mean that if the monomers used to form the blend of at least two polymers were instead combined as monomers before polymerisation, they would provide a ratio of monomers given in the above definition.

Surprisingly, it has been found that the swellable compositions containing the mixture of microparticles of at least two polymers provide acceptable results in terms of swelling and absorbance characteristics in the presence of standard water, cement water or ocean water. Furthermore, it has also been found that the compositions provide a consistent degree of swelling and absorbance in standard water, ocean water and cement water. The advantage of blends lies in the flexibility they confer by providing the desired features from a limited number of polymers. Nevertheless, the swellable compositions of the first embodiment are generally preferred since they tend to give at least slightly better performance.

The hydrophilic cross-linked polymer microparticles and swellable compositions containing them can be produced in exactly the same way as the microparticles used in the swellable compositions of the first embodiment.

Another embodiment of the instant invention relates to the use of the inventive composition for the manufacture of seals, in particular swellable waterstops.

Another embodiment of the instant invention relates to the use of the dispersion for the manufacture of the inventive compositions and polymer microparticles, and seals, in particular swellable waterstops.

Another embodiment of the instant invention relates to the use of the polymer microparticles for the manufacture of the inventive compositions.

A further embodiment of the instant invention concerns a swellable waterstop, in particular a PVC or rubber waterstop, as well as a water-stops for non-moving construction joints comprising the inventive compositions.

A further embodiment of the instant invention relates to seals comprising the inventive compositions.

The manufacture of water-stops and seals can be carried out by known methods, which e.g. are described in WO 00/78888, WO 99/35208, EP 588 286, EP 588 288, EP 179 937 or US 4,532,298.

The inventive water-swellable compositions usually absorb at least 25% by weight of water based on the original weight of the elastomeric composition, preferably at least 50% and most preferably at least 100%, in tests using demineralized water.

The provision of hydrophilic polymer microparticles in a substantially dry, carrier-free form leads to a number of advantages. Firstly, it is possible that a single product (substantially carrier-free hydrophilic polymer) could replace several products all with different carrier fluids for particular elastomeric compositions. It is advantageous for a manufacturer of hydrophilic polymer microparticles to minimise the variety of products in order to save costs of downtime that would otherwise arise from switching between the manufacture of one product type to another, and also to minimise raw material (i.e. carrier fluid) inventory and finished product inventory. It is advantageous to supply the hydrophilic polymer microparticles in as concentrated a form as possible to save transportation costs.

A significant advantage is the ability to produce inventive water-expandable elastomeric compositions using elastomeric materials that do not benefit from (or indeed are adversely affected by) the addition of large amounts of an oily fluid. Thus it is advantageous to use hydrophilic polymer microparticles that are substantially carrier-free to prepare inventive elastomeric compositions using elastomeric materials that do not benefit from the addition of plasticizer or other oily fluid in amounts above 30% by weight, preferably above 20% by weight and most preferably above 10% by weight of the final elastomeric composition. This applies to rubbers for example, where the incorporation of a reverse phase dispersion would unnecessarily add an oily fluid (the carrier fluid of the reverse phase dispersion) to the rubber composition. In many cases the addition of a lot of oily fluid will have a negative effect in terms of weakening the rubber composition or by adversely affecting other mechanical properties of the composition so produced. This problem can be overcome by using hydrophilic polymer microparticles that are substantially carrier-free.

The following examples illustrate the invention.

### Examples

### Example 1

Monomer composition comprising 2- acrylamido 2-methyl propane sulphonic acid, sodium salt (monomer 1) and acrylamide (monomer 2) in a ratio of 0.08:1, monomer 1: monomer 2 (mole basis).

An aqueous phase of water soluble components is prepared by admixing together the following components -
15.12 parts 2- acrylamido 2-methyl propane sulphonic acid, sodium salt @ 50%
59.29 parts acrylamide @ 51%
0.15 parts Versenex 80EMN^{®} @ 40%
0.94 parts methylene-bis-acrylamide solution @ 0.1 % in water
and balance made up to 100 parts with deionised water.

An oil phase is prepared by admixing together the following components -
3.98 parts Span 80^{®}
17.14 parts Ciba^{®} DPRS06-0005 @ 23.2%
48.47 parts DilsoDecylPhthalate
and balance made up to 100 parts with Exxsol D40^{®}

The 2 phases are mixed together in a ratio of 1 part oil phase to 1.326 parts aqueous phase under high shear to form a water-in-oil emulsion.

The resulting water-in-oil emulsion is transferred to a reactor equipped with nitrogen sparge tube, stirrer and thermometer. The emulsion is purged with nitrogen to remove oxygen. Polymerisation is effected at 10-20°C by addition of redox couple initiators known to persons skilled in the art.

After polymerisation exotherm is complete, a further post polymerisation redox initiator couple addition is made at 40-45°C to reduce any residual monomer to acceptable levels for the application. Typically emulsified sodium metabisulphite and tertiary butyl hydroperoxide solution is used, but not restricted to these initiators.

Vacuum distillation is carried out to remove water and volatile solvent to give final Product A with ~47% polymer solids.

### Example 2

Monomer composition comprising 2- acrylamido 2-methyl propane sulphonic acid, sodium salt (monomer 1) and acrylamide (monomer 2) in a ratio of 0.2:1, monomer 1: monomer 2 (mole basis).

The procedure of Example 1 is repeated, except using an alternative aqueous monomer phase, i.e.
30.24 parts 2- acrylamido 2-methyl propane sulphonic acid, sodium salt @ 50%
44.47 parts acrylamide @ 51%
0.15 parts Versenex 80EMN^{®} @ 40%
0.94 parts methylene-bis-acrylamide solution @ 0.1 % in water
and balance made up to 100 parts with deionised water.
Final Product B with ~47% polymer solids

### Example 3 (comparative)

Monomer composition comprising 100% 2- acrylamido 2-methyl propane sulphonic acid, sodium salt (monomer 1).

The procedure of Example 1 is repeated, except using an alternative aqueous monomer phase, i.e. 75.60 parts 2- acrylamido 2-methyl propane sulphonic acid, sodium salt @ 50%
0.15 parts Versenex 80EMN^{®} @ 40%
0.94 parts methylene-bis-acrylamide solution @ 0.1 % in water
and balance made up to 100 parts with deionised water.
N.B. the aqueous phase is pH adjusted to 6 with acetic acid as necessary.
Final Product C with ~47% polymer solids

### Example 4 (comparative)

Monomer composition comprising 100% acrylamide (monomer 2).

The procedure of Example 1 is repeated, except using an alternative aqueous monomer phase, i.e. 74.12 parts acrylamide @ 51 %
0.15 parts Versenex 80EMN^{®} @ 40%
0.94 parts methylene-bis-acrylamide solution @ 0.1 % in water
and balance made up to 100 parts with deionised water.
N.B. the aqueous phase is pH adjusted to 6 with acetic acid as necessary.
Final Product D with ~47% polymer solids

### Example 5

Blend comprising 30 parts by weight of Product C and 70 parts by weight Product D - hereafter named Product E

### Example 6

Monomer composition comprising 2- acrylamido 2-methyl propane sulphonic acid, sodium salt (monomer 1) and acrylamide (monomer 2) in a ratio of 0.46:1, monomer 1: monomer 2 (mole basis).

The procedure of Example 1 is repeated, except using an alternative aqueous monomer phase, i.e.
45.36 parts 2- acrylamido 2-methyl propane sulphonic acid, sodium salt @ 50%
29.65 parts acrylamide @ 51 %
0.15 parts Versenex 80EMN^{®} @ 40%
0.94 parts methylene-bis-acrylamide solution @ 0.1 % in water
and balance made up to 100 parts with deionised water.
Final Product F with ~47% polymer solids.

### Example 7

Monomer composition comprising 2- acrylamido 2-methyl propane sulphonic acid, sodium salt (monomer 1) and acrylamide (monomer 2) in a ratio of 1.24:1, monomer 1: monomer 2(mole basis).

The procedure of Example 1 is repeated, except using an alternative aqueous monomer phase, i.e.
61.36 parts 2- acrylamido 2-methyl propane sulphonic acid, sodium salt @ 50%
14.82 parts acrylamide @ 51%
0.15 parts Versenex 80EMN^{®} @ 40%
0.94 parts methylene-bis-acrylamide solution @ 0.1 % in water
and balance made up to 100 parts with deionised water.
Final Product G with ~47% polymer solids.

### Example 8

Blend comprising 60 parts by weight of Product C and 40 parts by weight Product D - hereafter named Product H.

### Example 9 (comparative)

Monomer composition comprising 100% sodium acrylate (monomer 3).

The procedure of Example 1 is repeated, except using an alternative aqueous monomer phase, i.e. 37.06 parts acrylic acid @ 80%
31.54 parts sodium hydroxide @ 47%
0.15 parts Versenex 80EMN^{®} @ 40%
0.94 parts methylene-bis-acrylamide solution @ 0.1 % in water
and balance made up to 100 parts with deionised water.
N.B. ensure the aqueous phase is kept below 20°C during the addition of the sodium hydroxide to neutralise the acrylic acid.
Final Product I with ~47% polymer solids.

### Example 10 (comparative)

Monomer composition comprising 2- acrylamido 2-methyl propane sulphonic acid, sodium salt (monomer 1) and sodium acrylate (monomer 3) in a ratio of 0.27:1, monomer 1: monomer 3 (mole basis).

The procedure of Example 1 is repeated, except using an alternative aqueous monomer phase, i.e. 30.24 parts 2- acrylamido 2-methyl propane sulphonic acid, sodium salt @ 50%
21.72 parts acrylic acid @ 80%
19.51 parts sodium hydroxide @ 47%
0.15 parts Versenex 80EMN^{®} @ 40%
0.94 parts methylene-bis-acrylamide solution @ 0.1 % in water
and balance made up to 100 parts with deionised water.
N.B. ensure the aqueous phase is kept below 20°C during the addition of the sodium hydroxide to neutralise the acrylic acid.
Final Product J with ~47% polymer solids.

### Example 11 (comparative)

Monomer composition comprising 2- acrylamido 2-methyl propane sulphonic acid, sodium salt (monomer 1), sodium acrylate (monomer 3) and acrylamide (monomer 2) in a ratio of 0.4:0.75:1, monomer 1: monomer 3: monomer 2 (mole basis).

The procedure of Example 1 is repeated, except using an alternative aqueous monomer phase, i.e. 30.24 parts 2- acrylamido 2-methyl propane sulphonic acid, sodium salt @ 50%
10.86 parts acrylic acid @ 80%
22.23 parts ACM @ 50%
9.75 parts sodium hydroxide @ 47%
0.15 parts Versenex 80EMN® @ 40%
0.94 parts methylene-bis-acrylamide solution @ 0.1 % in water
and balance made up to 100 parts with deionised water.
N.B. ensure the aqueous phase is kept below 20°C during the addition of the sodium hydroxide to neutralise the acrylic acid.
Final Product K with ~47% polymer solids.

### Example 12 - Water-swellable composition

A polyvinyl chloride (PVC) composition is prepared with Product A from Example 1, according to the formulation below:

| | |
|---|---|
| PVC emulsion homopolymer | 47.16 parts by weight |
| Ba/Zn stabiliser | 0.46 parts by weight |
| Ciba^{®} Irgastab^{®} PVC 11 | 0.46 parts by weight |
| Di-isodecylphthalate (DiDP) | 9.82 parts by weight |
| Product | 42.1 parts by weight |
| (Total) | (100 parts by weight) |

The 42.1 parts by weight of Product comprises approximately:

| | |
|---|---|
| Di-isodecylphthalate | 18.3 parts by weight |
| Hydrophilic polymer | 20.5 parts by weight |
| Other | 3.3 parts by weight |

| | |
|---|---|
| (Other = polymeric stabiliser, primary emulsifier and initiator residues) | |

The PVC emulsion homopolymer is Evipol^{®} EP7050 with a K-value of 70 supplied by EVC (European Vinyls Corporation). The Ba/Zn is Lankromark LZB693, a mixed metal stabiliser for PVC with a specific gravity of 1.09 @ 20°C and flash point >100°C (Pensky Martenes closed cup) from Akzo Nobel. Supplementing this is Ciba^{®} Irgastab^{®} PVC 11, which is a liquid thermal stabiliser package to protect plasticisers against thermal oxidation and PVC compounds against dehydrochlorination.

The following method is used: PVC emulsion homopolymer is firstly added to a stainless steel beaker and then placed under a Heidolph or similar stirrer fitted with a 4-blade stirrer. In a separate beaker the other components, i.e. Product A, Ba/Zn stabiliser, Ciba^{®} Irgastab^{®} PVC 11 and DiDP, are added and thoroughly stirred using a spatula until homogenous. This mix is then added slowly to the PVC emulsion homopolymer with gentle stirring at 500 r.p.m. and stirring continued for 10 minutes.

The resultant mix is carefully poured into small aluminium dishes (containing ~8g) and then covered with a thin metal sheet followed by a glass plate. A kilo weight is placed carefully on top of these and the whole placed in an oven at 180°C for 45 minutes. After this time the dishes are withdrawn from the oven, allowed to cool and the contents removed. 3cm x 2cm samples are cut from this compound and each of these is immersed separately in a bottle containing one of three different water qualities, viz:

### Standard water comprises 0.25 g/l CaCl₂.2H₂O

Ocean water typically containing salts associated with ocean water, comprises 24.53 g/l NaCl, 5.20 g/l MgCl₂, 4.09 g/l Na₂SO₄, 1.16 g/l CaCl₂, 0.695 g/l KCI, 0.201 g/l NaHCO₃, 0.101 g/l KBr, 0.027 g/l H₃BO₃, 0.025 g/l SrCl₂ and 0.003 g/l NaF made in accordance with ASTM (American Society for Testing and Materials) D 1141-98 (2003) 'Standard Practice for the Preparation of Substitute Ocean Water'.

Cement water comprises 10 g/l Ca(OH)₂

After 7 and 14 days the water is replaced with fresh test water.

The increase in weight is recorded after 3, 7, 10, 14 and 17 days and from this the percentage swell by weight is calculated as follows:
(W_{f} - Wₒ)/Wₒ x 100 where Wₒ = original (dry state) weight and W_{f} = final (water conditioned state) weight.

### Example 13 - water swellable composition

A polyvinyl chloride (PVC) composition is prepared and tested with Product B from Example 2 in the same way as described in Example 12.

### Example 14 - water-swellable composition

A polyvinyl chloride (PVC) composition is prepared and tested with Product E from Example 5 in the same way as described in Example 12.

### Example 15 - water-swellable composition

A polyvinyl chloride (PVC) composition is prepared and tested with Product F from Example 6 in the same way as described in Example 12.

### Example 16 - water-swellable composition

A polyvinyl chloride (PVC) composition is prepared and tested with Product G from Example 7 in the same way as described in Example 12.

### Example 17 - water-swellable composition

A polyvinyl chloride (PVC) composition is prepared and tested with Product H from Example 8 in the same way as described in Example 12.

### Example 18 (comparative) - water-swellable composition

A polyvinyl chloride (PVC) composition is prepared and tested with Product I from Example 9 in the same way as described in Example 12.

### Example 19 (comparative) - water-swellable composition

A polyvinyl chloride (PVC) composition is prepared and tested with Product J from Example 10 in the same way as described in Example 12.

### Example 20 (comparative) - water-swellable composition

A polyvinyl chloride (PVC) composition is prepared and tested with Product K from Example 11 in the same way as described in Example 12.

### Results for examples 12 - 20 inclusive

| Ex | Hydrophilic polymer composition (mole basis) | % swell (by weight) after 7 days | | | % swell (by weight) after 14 days | | |
|---|---|---|---|---|---|---|---|
| | | Standard water | Ocean water | Cement water | Standard water | Ocean water | Cement water |
| 12 | Product A | | | | | | |
| | monomer 1: | 74.2 | 52.1 | 65.3 | 76.4 | 59.3 | 76.3 |
| | monomer 2 (0.08:1) | | | | | | |
| 13 | Product B | | | | | | |
| | monomer 1: | 95.0 | 58.6 | 66.3 | 97.2 | 63.9 | 70.6 |
| | monomer 2 (0.21:1) | | | | | | |
| 14 | Product E | | | | | | |
| | blend comprising 30/70 w/w | 70.1 | 48.7 | 57.5 | 76.3 | 56.3 | 66.7 |
| | Product C/Product D | | | | | | |
| 15 | Product F | | | | | | |
| | monomer 1: | 132.5 | 67.7 | 76.9 | 135.4 | 74.7 | 78.8 |
| | monomer 2 (0.46:1) | | | | | | |
| 16 | Product G | | | | | | |
| | monomer 1: | 122.2 | 70.6 | 75.2 | 125.1 | 73.5 | 75.1 |
| | monomer 2 1.24:1 | | | | | | |
| 17 | Product H blend comprising 60/40 w/w | 99.0 | 60.0 | 71.2 | 102.7 | 64.6 | 73.5 |
| | Product C/Product D | | | | | | |
| 18* | Product I 100% monomer 3 | 139.5 | 50.4 | 67.5 | 52.9 | 54.9 | 58.0 |
| 19* | Product J | | | | | | |
| | monomer 1: | 139.9 | 50.5 | 72.4 | 158.0 | 63.2 | 59.0 |
| | monomer 3 (0.27:1) | | | | | | |
| 20* | Product K | | | | | | |
| | monomer 1: | 136.8 | 42.8 | 74.1 | 145.2 | 64.2 | 69.3 |
| | monomer 3: | | | | | | |
| | monomer 2 (0.4:0.75:1) | | | | | | |

| | | | | | | | |
|---|---|---|---|---|---|---|---|
| * comparative | | | | | | | |

### Example 21 - water-swellable composition

A polyvinyl chloride (PVC) composition is prepared with Product B from Example 2, according to the formulation below:

| | |
|---|---|
| PVC emulsion homopolymer | 35.88 parts by weight |
| Ba/Zn stabiliser | 0.46 parts by weight |
| Ciba® Irgastab® PVC 11 | 0.46 parts by weight |
| Product | 63.2 parts by weight |
| (Total) | (100 parts by weight) |

The 63.2 parts by weight of Product comprises approximately:

| | |
|---|---|
| Di-isodecylphthalate | 27.5 parts by weight |
| Hydrophilic polymer | 30.8 parts by weight |
| Other | 4.9 parts by weight |

| | |
|---|---|
| (Other = polymeric stabiliser, primary emulsifier and initiator residues) | |

Preparation of the mix and subsequent testing of the samples is carried out in accordance with Example 12.

### Example 22 (comparative) - water-swellable composition

A polyvinyl chloride (PVC) composition is prepared and tested with Product I from Example 9 in the same way as described in Example 21.

### Example 23 (comparative) - water swellable composition

A polyvinyl chloride (PVC) composition is prepared and tested with Product J from Example 10 in the same way as described in Example 21.

### Example 24 (comparative) - water swellable composition

A polyvinyl chloride (PVC) composition is prepared and tested with Product K from Example 11 in the same way as described in Example 21.

**Results for examples 21 - 24 inclusive**

| Ex | Hydrophilic polymer composition (mole basis) | % swell (by weight) after 7 days | | | % swell (by weight) after 14 days | | |
|---|---|---|---|---|---|---|---|
| | | Standard water | Ocean water | Cement water | Standard water | Ocean water | Cement water |
| 21 | Product B | | | | | | |
| | monomer 1: | 247.9 | 127.7 | 134.0 | 256.3 | 135.4 | 144.7 |
| | monomer 2 (0.2: 1) | | | | | | |
| 22* | Product I | 422.4 | 73.8 | 170.0 | 444.0 | 90.9 | 54.1 |
| | 100% monomer 3 | | | | | | |
| 23* | Product J | | | | | | |
| | monomer 1: | - | - | 162.3 | - | - | 99.3 |
| | monomer 3 (0.27:1) | | | | | | |
| 24* | Product K | | | | | | |
| | monomer 1: | - | - | 165.0 | - | - | 144.4 |
| | monomer 3: | | | | | | |
| | monomer 2 (0.4:0.75:1) | | | | | | |

| | | | | | | | |
|---|---|---|---|---|---|---|---|
| * comparative | | | | | | | |

## Claims

1. A water-swellable composition obtainable by combining a non-water-swelling thermoplastic or elastomeric polymer and a water-swelling material, comprising
(a) from 5 to 70% by weight of hydrophilic cross-linked polymer microparticles,
(b) from 30 to 95 % by weight of a water-insoluble thermoplastic polymer, resin or elastomeric material,
in which the hydrophilic cross-linked polymer microparticles have a particle volume mean diameter of not more than 20 microns (as determined by laser diffraction technique),
wherein the hydrophilic cross-linked polymer microparticles are formed from a monomer blend comprising,
i) ethylenically unsaturated monomer containing sulphonic acid groups or salts thereof, in which the monomer is an acrylic sulphonic acid having the formula:
CH₂=CR (CO) -(NH)-Y-SO₃M
wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer, selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile,
in which the ratio of i) to ii) is in the range of 0.006:1 to 6:1 (mole basis).

2. A water swellable composition according to claim 1 in which the monomer blend further comprises up to 50 mole% water soluble ethylenically unsaturated monomer containing carboxylic acid groups selected from the group consisting of acrylic acid, methacrylic acid, itaconic acid, maleic acid and fumaric acid or salts thereof and/or the monomer blend further comprises up to 50 mole% other ethylenically unsaturated monomer.

3. A process for the manufacture of the compositions of claim 1 or claim 2 comprising admixing 5 to 70 % by weight of hydrophilic cross-linked microparticles and 30 to 95 % by weight of water-insoluble thermoplastic polymer, resin or elastomeric material.

4. A water-swellable composition obtainable by combining a non-water-swelling thermoplastic or elastomeric polymer and a water-swelling material, comprising
(a) from 5 to 70%, preferably 10 to 60, most preferably from 15 to 50 % by weight of hydrophilic cross-linked polymer microparticles,
(b) from 30 to 95%, preferably 40 to 90, most preferably from 50 to 85% by weight of a water-insoluble thermoplastic polymer, resin or elastomeric material,
in which the hydrophilic polymer microparticles have a particle volume mean diameter of not more than 20 microns (as determined by laser diffraction technique),
wherein the hydrophilic polymer microparticles are a blend of at least two polymers in which at least one polymer is formed from a monomer or monomer blend comprising ethylenically unsaturated monomer containing sulphonic acid groups or salts thereof, and optionally non-ionic water-soluble ethylenically unsaturated monomer selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, and optionally water-soluble ethylenically unsaturated carboxylic acid monomer or salts thereof, and optionally other ethylenically unsaturated monomer and in which at least one further polymer which is formed from a monomer or monomer blend comprising non-ionic water-soluble ethylenically unsaturated monomer selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile, and optionally ethylenically unsaturated monomer containing sulphonic acid groups or salts thereof, and optionally water-soluble ethylenically unsaturated carboxylic acid monomer selected from the group consisting of acrylic acid, methacrylic acid, itaconic acid, maleic acid and fumaric acid or salts thereof and optionally other ethylenically unsaturated monomer and in which the total combination of the blend of polymers provide an equivalent amount of monomer components of
i) ethylenically unsaturated monomer containing sulphonic acid groups or salts thereof, in which the monomer is an acrylic sulphonic acid having the formula:
CH₂=CR (CO) -(NH)-Y-SO₃M
wherein R is hydrogen, methyl or ethyl, M is selected from hydrogen, a metal ion, ammonium ion, protonated primary, secondary or tertiary amine or a quaternary ammonium ion and Y is a straight or branched C₁₋₈ alkylene group,
ii) non-ionic water-soluble ethylenically unsaturated monomer selected from the group consisting of acrylamide, methacrylamide, N,N-di(C₁-C₈alkyl) (meth)acrylamide, N-(C₁-C₈alkyl) (meth) acrylamide, vinyl alcohol, vinyl acetate, allyl alcohol, hydroxyethyl methacrylate, hydroxyethyl acrylate and acrylonitrile,
in which the equivalent amount of monomer components has the ratio of i) to ii) in the range of 0.006:1 to 6:1 (mole basis).

5. Use of the composition of claim 1, claim 2 or claim 4 for the manufacture of seals.

6. Seals comprising the compositions according to claim 1, or claim 2.

7. Seals according to claim 6, wherein the seal is a swellable waterstop, preferably a PVC or rubber waterstop.

## Patentansprüche

1. Wasserquellbare Zusammensetzung, die durch Kombinieren eines nicht in Wasser quellenden thermoplastischen oder elastomeren Polymers und eines in Wasser quellenden Materials erhalten werden kann, umfassend
(a) von 5 bis 70 Gew.-% hydrophile vernetzte Polymermikroteilchen,
b) von 30 bis 95 Gew.-% eines wasserunlöslichen thermoplastischen Polymers, Harzes oder Elastomermaterials,
wobei die hydrophilen vernetzten Polymermikroteilchen einen durchschnittlichen Teilchenvolumen-Durchmesser von nicht mehr als 20 Mikrometer aufweisen (wie durch Laserbeugungstechnik bestimmt),
wobei die hydrophilen vernetzten Polymermikroteilchen aus einem Monomergemisch gebildet sind, umfassend
(i) ethylenisch ungesättigtes Monomer, enthaltend Sulfonsäuregruppen oder Salze davon, wobei das Monomer eine Acrylsulfonsäure mit der folgenden Formel ist:
CH₂=CR (CO)-(NH)-Y-SO₃M
worin R Wasserstoff, Methyl oder Ethyl ist, M ausgewählt ist aus Wasserstoff, einem Metallion, Ammoniumion, einem protonierten primären, sekundären oder tertiären Amin oder einem quartären Ammoniumion und Y eine geradkettige oder verzweigte C₁₋₈-Alkylengruppe ist,
(ii) ein nichtionisches wasserlösliches ethylenisch ungesättigtes Monomer, ausgewählt aus der Gruppe, bestehend aus Acrylamid, Methacrylamid, N,N-Di(C₁-C₈-alkyl)(meth)acrylamid, N- (C₁-C₈-alkyl) (meth)acrylamid, Vinylalkohol, Vinylacetat, Allylalkohol, Hydroxyethylmethacrylat, Hydroxyethylacrylat und Acrylnitril, wobei das Verhältnis von i) zu ii) im Bereich von 0,006:1 bis 6:1 (Molbasis) liegt.

2. Wasserquellbare Zusammensetzung nach Anspruch 1, wobei das Monomergemisch ferner bis zu 50 Mol-% wasserlösliches ethylenisch ungesättigtes Monomer umfasst, das Carbonsäuregruppen enthält, die ausgewählt sind aus der Gruppe, bestehend aus Acrylsäure, Methacrylsäure, Itaconsäure, Maleinsäure und Fumarsäure oder Salzen davon, und/oder das Monomergemisch ferner bis zu 50 Mol-% eines anderen ethylenisch ungesättigten Monomers umfasst.

3. Verfahren zur Herstellung der Zusammensetzungen nach Anspruch 1 oder Anspruch 2, umfassend das Beimengen von 5 bis 70 Gew.-% hydrophile vernetzte Mikroteilchen und 30 bis 95 Gew.-% wasserunlösliches thermoplastisches Polymer, Harz oder Elastomermaterial.

4. Wasserquellbare Zusammensetzung, die durch Kombinieren eines nicht in Wasser quellenden thermoplastischen oder Elastomerpolymers und eines in Wasser quellenden Materials erhalten werden kann, umfassend
(a) von 5 bis 70 Gew.-%, vorzugsweise 10 bis 60 und am meisten bevorzugt von 15 bis 50 Gew.-% hydrophile vernetzte Polymermikroteilchen,
(b) von 30 bis 95 Gew.-%, vorzugsweise von 40 bis 90 und am meisten bevorzugt von 50 bis 85 Gew.-% ein wasserunlösliches thermoplastisches Polymer, Harz oder Elastomermaterial,
wobei die hydrophilen Polymermikroteilchen einen durchschnittlichen Teilchenvolumen-Durchmesser von nicht mehr als 20 Mikrometer aufweisen (wie durch Laserbeugungstechnik bestimmt), wobei die hydrophilen Polymermikroteilchen ein Gemisch aus mindestens zwei Polymeren sind, wobei mindestens ein Polymer aus einem Monomer oder einem Monomer-Gemisch gebildet wird, das ethylenisch ungesättigtes Monomer umfasst, das Sulfonsäuregruppen oder Salze davon enthält, sowie wahlweise nichtionisches wasserlösliches ethylenisch ungesättigtes Monomer, das ausgewählt ist aus der Gruppe, bestehend aus Acrylamid, Methacrylamid, N-N-Di (C₁-C₈-alkyl) (meth) acrylamid, N- (C₁-C₈-alkyl)(meth)acrylamid, Vinylalkohol, Vinylacetat, Allylalkohol, Hydroxyethylmethacrylat, Hydroxyethylacrylat und Acrylnitril, und wahlweise wasserlösliches ethylenisch ungesättigtes Carbonsäuremonomer oder Salze davon sowie wahlweise ein anderes ethylenisch ungesättigtes Monomer, wobei mindestens ein weiteres Polymer aus einem Monomer oder einem Monomergemisch gebildet wird, ein nicht ionisches wasserlösliches ethylenisch ungesättigtes Monomer umfasst, das ausgewählt ist aus der Gruppe, bestehend aus Acrylamid, Methacrylamid, N-N-Di(C₁-C₈-Alkyl)(meth)acrylamid, N- (C₁-C₈-Alkyl) (meth)acrylamid, Vinylalkohol, Vinylacetat, Allylalkohol, Hydroxyethylmethacrylat, Hydroxyethylacrylat und Acrylnitril und wahlweise ethylenisch ungesättigtes Monomer, das Sulfonsäuregruppen oder Salze davon enthält, und wahlweise wasserlösliches ethylenisch ungesättigtes Carbonsäuremonomer, das ausgewählt ist aus der Gruppe, bestehend aus Acrylsäure, Methacrylsäure, Itaconsäure, Maleinsäure und Fumarsäure oder Salzen davon sowie wahlweise ein anderes ethylenisch ungesättigtes Monomer und wobei die gesamte Kombination des Gemisches aus Polymeren eine äquivalente Menge von Monomerbestandteilen bereitstellt von:
(i) ethylenisch ungesättigtem Monomer, enthaltend Sulfonsäuregruppen oder Salze davon, wobei das Monomer eine Acrylsulfonsäure mit der folgenden Formel ist:
CH₂=CR (CO)-(NH)-Y-SO₃M
worin R Wasserstoff, Methyl oder Ethyl ist, M ausgewählt ist aus Wasserstoff, einem Metallion, Ammoniumion, einem protonierten primären, sekundären oder tertiären Amin oder einem quartären Ammoniumion und Y eine geradkettige oder verzweigte C₁₋₈-Alkylengruppe ist,
(ii) nichtionischem wasserlöslichen ethylenisch ungesättigten Monomer, das ausgewählt ist aus der Gruppe, bestehend aus Acrylamid, Methacrylamid, N-N-Di (C₁-C₈-Alkyl) (meth) acrylamid, N- (C₁-C₈-Alkyl)(meth)acrylamid, Vinylalkohol, Vinylacetat, Allylalkohol, Hydroxyethylmethacrylat, Hydroxyethylacrylat und Acrylnitril,
wobei die äquivalente Menge von Monomerbestandteilen ein Verhältnis von i) zu ii) im Bereich von 0,006:1 bis 6:1 (Molbasis) aufweist.

5. Verwendung der Zusammensetzung nach Anspruch 1, Anspruch 2 oder Anspruch 4 für die Fertigung von Dichtungen.

6. Dichtungen, umfassend die Zusammensetzungen nach Anspruch 1 oder Anspruch 2.

7. Dichtungen nach Anspruch 6, wobei die Dichtung ein quellbares Fugenband ist, vorzugsweise ein PVC- oder Kautschukfugenband.

## Revendications

1. Composition pouvant gonfler avec l'eau pouvant être obtenue par combinaison d'un polymère thermoplastique ou élastomère ne gonflant pas avec l'eau et d'un matériau gonflant avec l'eau, comprenant
(a) de 5 à 70 % en poids de microparticules de polymère réticulé hydrophiles,
(b) de 30 à 95 % en poids d'un polymère thermoplastique, d'une résine ou d'un matériau élastomère insolubles dans l'eau,
les microparticules de polymère réticulé hydrophiles ayant un diamètre de particule moyen en volume (tel que déterminé par la technique de diffraction laser) inférieur ou égal à 20 micromètres,
les microparticules de polymère réticulé hydrophiles étant formées à partir d'un mélange de monomères comprenant,
i) un monomère à insaturation éthylénique contenant des groupes acide sulfonique ou des sels de ceux-ci, le monomère étant un acide sulfonique acrylique répondant à la formule :
CH₂=CR(CO)-(NH)-Y-SO₃M
dans laquelle
R est l'atome d'hydrogène ou le groupe méthyle ou éthyle,
M est choisi parmi l'atome d'hydrogène, un ion métallique, l'ion ammonium, une amine primaire, secondaire ou tertiaire protonée ou un ion ammonium quaternaire et
Y est un groupe alkylène en C₁₋₈ droit ou ramifié,
ii) un monomère à insaturation éthylénique hydrosoluble non ionique, choisi dans le groupe constitué par l'acrylamide, le méthacrylamide, un *N,N-*di(alkyl en C₁-C₈) (méth) acrylamide, un *N*-(alkyl en C₁-C₈) (méth) acrylamide, l'alcool vinylique, l'acétate de vinyle, l'alcool allylique, le méthacrylate d'hydroxyéthyle, l'acrylate d'hydroxyéthyle et l'acrylonitrile,
le rapport de i) à ii) étant dans la plage de 0,006:1 à 6:1 (sur une base molaire).

2. Composition pouvant gonfler avec l'eau selon la revendication 1, le mélange de monomères comprenant en outre jusqu'à 50 % en mole de monomère à insaturation éthylénique hydrosoluble contenant des groupes acide carboxylique choisi dans le groupe constitué par l'acide acrylique, l'acide méthacrylique, l'acide itaconique, l'acide maléique et l'acide fumarique ou les sels de ceux-ci et/ou le mélange de monomères comprenant en outre jusqu'à 50 % en mole d'un autre monomère à insaturation éthylénique.

3. Procédé pour la fabrication des compositions selon la revendication 1 ou la revendication 2 comprenant le mélange de 5 à 70 % en poids de microparticules réticulées hydrophiles et de 30 à 95 % en poids de polymère thermoplastique, résine ou matériau élastomère insoluble dans l'eau.

4. Composition pouvant gonfler avec l'eau pouvant être obtenue par combinaison d'un polymère thermoplastique ou élastomère ne gonflant pas avec l'eau et d'un matériau gonflant avec l'eau, comprenant
(a) de 5 à 70 %, de préférence 10 à 60, de préférence par-dessus tout de 15 à 50 % en poids de microparticules de polymère réticulé hydrophiles,
(b) de 30 à 95 %, de préférence 40 à 90, de préférence par-dessus tout de 50 à 85 % en poids d'un polymère thermoplastique, d'une résine ou d'un matériau élastomère insolubles dans l'eau,
les microparticules de polymère hydrophiles ayant un diamètre de particule moyen en volume (tel que déterminé par la technique de diffraction laser) inférieur ou égal à 20 micromètres,
les microparticules de polymère hydrophiles étant un mélange d'au moins deux polymères, au moins un polymère étant formé à partir d'un monomère ou mélange de monomères comprenant un monomère à insaturation éthylénique contenant des groupes acide sulfonique ou des sels de ceux-ci, et facultativement un monomère à insaturation éthylénique hydrosoluble non ionique choisi dans le groupe constitué par l'acrylamide, le méthacrylamide, un *N,N*-di(alkyl en C₁-C₈) (méth) acrylamide, un *N*-(alkyl en C₁-C₈)(méth)acrylamide, l'alcool vinylique, l'acétate de vinyle, l'alcool allylique, le méthacrylate d'hydroxyéthyle, l'acrylate d'hydroxyéthyle et l'acrylonitrile et facultativement un monomère acide carboxylique à insaturation éthylénique hydrosoluble ou des sels de celui-ci et facultativement un autre monomère à insaturation éthylénique et au moins un autre polymère étant formé à partir d'un monomère ou mélange de monomères comprenant un monomère à insaturation éthylénique hydrosoluble non ionique choisi dans le groupe constitué par l'acrylamide, le méthacrylamide, un *N,N*-di(alkyl en C₁-C₈) (méth) acrylamide, un *N*-(alkyl en C₁-C₈)(méth)acrylamide, l'alcool vinylique, l'acétate de vinyle, l'alcool allylique, le méthacrylate d'hydroxyéthyle, l'acrylate d'hydroxyéthyle et l'acrylonitrile et facultativement un monomère à insaturation éthylénique contenant des groupes acide sulfonique ou des sels de ceux-ci et facultativement un monomère acide carboxylique à insaturation éthylénique hydrosoluble choisi dans le groupe constitué par l'acide acrylique, l'acide méthacrylique, l'acide itaconique, l'acide maléique et l'acide fumarique ou les sels de ceux-ci et facultativement un autre monomère à insaturation éthylénique, la combinaison totale du mélange de polymères fournissant une quantité équivalente de composants monomères de
i) un monomère à insaturation éthylénique contenant des groupes acide sulfonique ou des sels de ceux-ci, le monomère étant un acide sulfonique acrylique répondant à la formule :
CH₂=CR(CO)-(NH)-Y-SO₃M
dans laquelle
R est l'atome d'hydrogène ou le groupe méthyle ou éthyle,
M est choisi parmi l'atome d'hydrogène, un ion métallique, l'ion ammonium, une amine primaire, secondaire ou tertiaire protonée ou un ion ammonium quaternaire et
Y est un groupe alkylène en C₁₋₈ droit ou ramifié,
ii) un monomère à insaturation éthylénique hydrosoluble non ionique, choisi dans le groupe constitué par l'acrylamide, le méthacrylamide, un *N,N*-di(alkyl en C₁-C₈) (méth) acrylamide, un *N*-(alkyl en C₁-C₈) (méth) acrylamide, l'alcool vinylique, l'acétate de vinyle, l'alcool allylique, le méthacrylate d'hydroxyéthyle, l'acrylate d'hydroxyéthyle et l'acrylonitrile,
la quantité équivalente de composants monomères ayant le rapport de i) à ii) dans la plage de 0,006:1 à 6:1 (sur une base molaire).

5. Utilisation de la composition selon la revendication 1, la revendication 2 ou la revendication 4 pour la fabrication de produits d'étanchéité.

6. Produits d'étanchéité comprenant les compositions selon la revendication 1 ou la revendication 2.

7. Produits d'étanchéité selon la revendication 6, le produit d'étanchéité étant un joint d'arrêt d'eau pouvant gonfler, de préférence un joint d'arrêt d'eau en PVC ou en caoutchouc.
